# EUROPÄISCHE PATENTANMELDUNG

(11) **EP 2 804 165 A1**
(43) Veröffentlichungstag der Anmeldung: **19.11.2014**
(21) Anmeldenummer: 14165360.0
(22) Anmeldetag: 22.04.2014
(51) Int. Cl.: G08C 17/02

(54) **System mit einem Haushaltsgerät und einer Kommunikationseinrichtung sowie Verfahren zum Betrieb eines solchen Systems**

(30) Priorität: 15.05.2013 DE 102013104976
(71) Anmelder: Miele & Cie. KG, 33332 Gütersloh (DE)
(72) Erfinder: Enslin, Andreas, 33334 Gütersloh (DE)

(57) **Zusammenfassung**

Angegeben werden ein System mit einem Haushaltsgerät (10), einer mobile Kommunikationseinrichtung (16) und mindestens einem dem Haushaltsgerät (10) räumlich zugeordneten RFID-Transponder (14), wobei mittels der Kommunikationseinrichtung (16) eine Kennung (20) eines in einem Erfassungsbereich der Kommunikationseinrichtung (16) befindlichen RFID-Transponders (14) auslesbar ist und wobei mittels einer jeweils ausgelesenen Kennung (20) eine in einem Speicher (22) der Kommunikationseinrichtung (16) projektierte Aktion (28) abrufbar ist, sowie ein Verfahren zum Betrieb eines solchen Systems und eine in einem solchen System oder für ein solches Verfahren verwendbare Kommunikationseinrichtung (16).

## Beschreibung

Die Erfindung betrifft ein System, das zumindest ein Haushaltsgerät, eine mobile Kommunikationseinrichtung und mindestens einen dem Haushaltsgerät räumlich zugeordneten RFID-Transponder umfasst. Die Erfindung betrifft im Weiteren auch ein Verfahren zum Betrieb eines solchen Systems und eine in einem solchen System oder bei der Ausführung eines solchen Verfahrens verwendbare mobile Kommunikationseinrichtung. Die mobile Kommunikationseinrichtung wird im Folgenden mitunter auch nur kurz als Kommunikationseinrichtung bezeichnet. Als Kommunikationseinrichtung kommen ein Mobilfunkgerät, insbesondere ein Mobilfunkgerät in Form eines Smartphones, ein Tablet Computer und dergleichen in Betracht.

Aus der WO 2011/103680 A ist ein Ansatz bekannt, bei dem für ein auf einem einzigen sogenannten Chip realisiertes System (PSoC = Programmable System on Chip) mittels eines Mobilfunkgeräts das Herunterladen von Software aus dem Internet möglich sein soll. Das PSoC ist Bestandteil der Steuerungseinrichtung eines Haushaltsgeräts, zum Beispiel eines Kühlschranks, eines Mikrowellengeräts oder dergleichen, und mit dem Ansatz soll eine Wartung des jeweiligen Haushaltsgeräts dadurch erleichtert werden, dass die Steuerungseinrichtung in einzelne Module aufgeteilt ist und das Nachladen von Software möglich ist.

Bei Haushaltsgeräten ist mittlerweile bekannt, diese mittels Aufklebern oder Anhängern mit einem zweidimensionalen Code (QR-Code, DataMatrix-Code oder dergleichen) zu versehen und dem Benutzer, Kunden oder Interessenten auf diese Weise weitere Informationen zu dem jeweiligen Haushaltsgerät zugänglich zu machen. Der jeweilige Code wird dabei mittels einer von heutigen sogenannten Smartphones üblicherweise umfassten Digitalkamera erfasst und mittels einer in den Speicher des Smartphones geladenen Software ausgewertet. Die Informationen können dabei direkt in dem jeweils generierten Code enthalten sein oder der Code enthält Daten über den Speicherort solcher Informationen, also zum Beispiel eine Internetadresse.

Im Internet (http://www.lgblog.de/2012/07/19/mit-nfc-tags-wie-von-zauberhand-steuern-das-Ig-smartphone-p880-optimus-4x-hd-im-test-2/; abgerufen am 26.02.2013) ist eine Nutzung eines sogenannten Smartphones zusammen mit einem oder mehreren RFID-Transpondern beschrieben. Danach sollen solche RFID- Transponder an bestimmten, vom Benutzer des Smartphones vorgesehenen Positionen angebracht, nämlich aufgeklebt werden. Sobald sich ein RFID- Transponder im Erfassungsbereich des Smartphones befindet, werden automatisch bestimmte Einstellungen des Smartphones geändert, so dass das Smartphone bei einer Verwendung am Schreibtisch - und einer vorangehenden Erfassung eines dort platzierten RFID- Transponders - in einen "Lautlos" Betriebsmodus versetzt wird. In Bezug auf diese Belegstelle zum Stand der Technik wird darauf hingewiesen, dass diese im Rahmen einer von der Erfindung ausgehenden Recherche und in Kenntnis der Erfindung ermittelt worden ist.

Eine Aufgabe der Erfindung besteht darin, neue Anwendungsmöglichkeiten einer mobilen Kommunikationseinrichtung im Zusammenhang mit einem Haushaltsgerät oder einer Mehrzahl von Haushaltsgeräten anzugeben.

Erfindungsgemäß wird diese Aufgabe durch ein System sowie ein Verfahren zum Betrieb eines solchen Systems mit den Merkmalen der unabhängigen Patentansprüche gelöst. Das System umfasst ein Haushaltsgerät, eine mobile Kommunikationseinrichtung sowie mindestens einen dem Haushaltsgerät räumlich zugeordneten RFID-Transponder. Das System zeichnet sich dadurch aus, dass mittels der Kommunikationseinrichtung eine Kennung eines in einem Erfassungsbereich der Kommunikationseinrichtung befindlichen RFID-Transponders auslesbar ist und mittels einer jeweils ausgelesenen Kennung eine in einem Speicher der Kommunikationseinrichtung projektierte Aktion abrufbar ist. Zum Auslesen der Kennung umfasst die Kommunikationseinrichtung, bei der es sich zum Beispiel um ein Mobilfunkgerät, insbesondere ein Mobilfunkgerät in Form eines sogenannten Smartphones, oder einen sogenannten PDA (Personal Digital Assistant) oder einen Tablet Computer handelt, eine entsprechende Nahbereichskommunikationsschnittstelle.

Bei einem Verfahren zum Betrieb eines solchen Systems ist vorgesehen, dass mittels der Kommunikationseinrichtung eine Kennung eines in einem Erfassungsbereich der Kommunikationseinrichtung befindlichen RFID-Transponders ausgelesen wird und dass mittels einer jeweils ausgelesenen Kennung eine in einem Speicher der Kommunikationseinrichtung projektierte Aktion abrufbar ist und im Betrieb abgerufen wird.

Ein solcher RFID-Transponder ist ein Beispiel für eine im Rahmen einer sogenannten Near Field Communication (zu deutsch: Nahbereichskommunikation; Abkürzung: NFC) verwendbaren Datenquelle. Grundsätzlich kommen anstelle eines solchen RFID-Transponders auch andere Datenquellen in Betracht. Wesentlich ist, dass das Auslesen der Kennung elektronisch und berührungslos erfolgt. Ein RFID-Transponder oder jede andere im Wege einer Nahbereichskommunikation auslesbare Datenquelle ist eine Möglichkeit, um eine dort abrufbare Kennung dauerhaft mit einem Haushaltsgerät und/oder einem Ort in räumlicher Nähe zu dem Haushaltsgerät zu kombinieren. Im Folgenden wird ohne Verzicht auf eine weitergehende Allgemeingültigkeit der Begriff RFID-Transponder als Beschreibung für jede im Wege einer Nahbereichskommunikation berührungslos und elektronisch auslesbare Datenquelle verwendet. Weil heutzutage gebräuchliche mobile Kommunikationseinrichtungen, insbesondere Mobiltelefone und speziell Mobiltelefone in Form sogenannter Smartphones, bereits eine Schnittstelle für eine Nahbereichskommunikation in diesem Sinne, insbesondere eine NFC-Schnittstelle, aufweisen, besteht für den Benutzer jederzeit und nahezu unproblematisch die Möglichkeit, die jeweilige Kennung abzurufen.

Der Vorteil der Erfindung besteht darin, dass mittels des zumindest einen dem Haushaltsgerät räumlich zugeordneten RFID-Transponders eine spezifische Aktion, insbesondere eine haushaltsgerätsspezifische oder ortsspezifische Aktion oder eine gleichermaßen haushaltsgerätsspezifische wie ortsspezifische Aktion bei der Kommunikationseinrichtung abrufbar ist und im Betrieb abgerufen wird.

Exemplarisch kann dies anhand einer Kochfläche als Haushaltsgerät erläutert werden. Wenn einer solchen Kochfläche zumindest ein RFID-Transponder räumlich zugeordnet ist, lässt sich, sobald die Kommunikationseinrichtung so positioniert ist, dass sich der RFID-Transponder oder einer der RFID-Transponder im Erfassungsbereich der Kommunikationseinrichtung befindet und damit die von dem RFID-Transponder umfasste Kennung auslesbar ist, eine im Speicher der Kommunikationseinrichtung projektierte haushaltsgeräts- und/oder ortsspezifische Aktion bei der Kommunikationseinrichtung abrufen. Die Projektierung der jeweiligen Aktion umfasst dabei, dass eine bei einem RFID-Transponder auslesbare Kennung ebenfalls im Speicher der Kommunikationseinrichtung abgelegt ist, so dass die jeweils ausgelesene Kennung mit zumindest einer im Speicher der Kommunikationseinrichtung abgelegten Kennung verglichen werden kann und bei Übereinstimmung eine mit der im Speicher abgelegten Kennung assoziierte Aktion abgerufen wird.

Auf diese Weise kann die Kommunikationseinrichtung mittels einer im Speicher der Kommunikationseinrichtung implementierten Software quasi erkennen, ob sie sich in räumlicher Nähe zu einer Kochfläche befindet. Als projektierte Aktion kann dann eine spezifische Softwarefunktionalität aufgerufen werden. Der Aufruf einer solchen Softwarefunktionalität umfasst zum Beispiel den Abruf einer innerhalb der Softwarefunktionalität vorgegebenen oder vorgebbaren Adresse im Internet, etwa um dort Rezepte oder dergleichen abzurufen. Der Aufruf einer solchen Softwarefunktionalität kann genauso einen Zugang zu einer lokalen Datenbasis, etwa mit Rezepten oder dergleichen, ermöglichen. Eine solche lokale Datenbasis kann sich zum Beispiel auf einem sogenannten Network Attached Server (NAS) befinden, so dass ein leitungsloser Zugriff mittels der Kommunikationseinrichtung möglich ist. Bei einem anderen Haushaltsgerät, zum Beispiel einem Kühlschrank, wird bei einem dem Kühlschrank räumlich zugeordneten RFID-Transponder eine andere Kennung ausgelesen. Mittels dieser Kennung ist dann bei der Kommunikationseinrichtung eine andere haushaltsgeräts- und/oder ortsspezifische Aktion abrufbar.

Vorteilhafte Ausgestaltungen und Weiterbildungen der Erfindung ergeben sich aus den nachfolgenden Unteransprüchen. Dabei verwendete Rückbeziehungen weisen auf die weitere Ausbildung des Gegenstands des Hauptanspruchs durch die Merkmale des jeweiligen Unteranspruchs hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Systems ist vorgesehen, dass das Haushaltsgerät und die Kommunikationseinrichtung jeweils eine Nahbereichskommunikationsschnittstelle aufweisen und dass mittels der Nahbereichskommunikationsschnittstellen Daten zwischen dem Haushaltsgerät und der Kommunikationseinrichtung in Abhängigkeit von einer jeweils ausgelesenen Kennung austauschbar sind. Wenn auf diese Weise ein Datenaustausch möglich ist, ist in Abhängigkeit von dem jeweils erfassten RFID-Transponder und der dort ausgelesenen Kennung nicht nur eine spezifische Aktion bei der Kommunikationseinrichtung abrufbar, sondern die spezifische Aktion kann auch die jeweils ausgetauschten Daten verwenden. Dann ist zum Beispiel eine Anzeige einer Information in Bezug auf einen Status des Haushaltsgeräts (Statusinformation) mittels der jeweiligen Kommunikationseinrichtung möglich, zum Beispiel ob das Kochfeld aktiviert ist. Im Gegensatz zu einem solchen unidirektionalen Datenaustausch ist bei einer besonderen Ausführungsform des Systems auch ein bidirektionaler Datenaustausch vorgesehen. Dann ist mittels der jeweiligen Kommunikationseinrichtung auch eine Bedienung des Haushaltsgeräts, also zum Beispiel des Kochfelds, möglich.

Bei einer Ausführungsform des Systems oder des von dem System umfassten Haushaltsgeräts ist vorgesehen, dass der oder jeder RFID-Transponder in eine Oberfläche des Haushaltsgeräts integriert ist, zum Beispiel in eine Abdeckplatte einer Waschmaschine oder eines Trockners. Mit der Installation des Haushaltsgeräts am Aufstellungsort ist dann der oder jeder RFID-Transponder ebenfalls installiert und geeignet positioniert. Der Benutzer kann die Erfassbarkeit des oder jedes RFID-Transponders mittels seiner jeweiligen Kommunikationseinrichtung sofort nutzen.

Bei einer zusätzlichen oder alternativen Ausführungsform des Systems ist vorgesehen, dass der oder jeder RFID-Transponder in eine Arbeitsfläche integriert ist, in die das Haushaltsgerät eingebaut oder einbaubar ist. Dann ist eine größere Fläche im räumlichen Umfeld des jeweiligen Haushaltsgeräts nutzbar. So kann zum Beispiel vorgesehen sein, dass sich bei einem Haushaltsgerät in Form einer Kochfläche in der Arbeitsfläche, in welche die Kochfläche eingebaut ist, im Bereich einer unteren linken Ecke des Kochfelds ein RFID-Transponder befindet, dessen Kennung - wie oben beschrieben - den Zugriff auf Rezeptdaten mittels der Kommunikationseinrichtung ermöglicht, während sich im Bereich einer oberen rechten Ecke des Kochfelds ein RFID-Transponder befindet, dessen Kennung einen Aufruf einer als Internetradio bekannten Funktionalität bei der Kommunikationseinrichtung ermöglicht, und so weiter.

Weitere vorteilhafte Ausgestaltungen des Systems ergeben sich aus einer Umsetzung einzelner oder mehrerer Merkmale der im Folgenden beschriebenen besonderen Ausführungsformen des Verfahrens und seiner Ausgestaltungen. Das System und die davon umfassten Komponenten, nämlich insbesondere das Haushaltsgerät und die mobile Kommunikationseinrichtung, weist bzw. weisen dafür Mittel zur Ausführung der jeweiligen Verfahrensschritte auf.

Wenn nicht nur die Kommunikationseinrichtung, sondern auch das Haushaltsgerät eine Nahbereichskommunikationsschnittstelle aufweist, zeichnet sich eine Ausführungsform des Verfahrens dadurch aus, dass mittels der beiden Nahbereichskommunikationsschnittstellen Daten unidirektional oder bidirektional zwischen dem Haushaltsgerät und der Kommunikationseinrichtung austauschbar sind und dass die Kommunikationseinrichtung Daten vom Haushaltsgerät empfängt und/oder Daten an das Haushaltsgerät übermittelt. Dann ist im Rahmen des Verfahrens - wie oben bereits beschrieben - zum Beispiel eine Darstellung einer Statusinformation des Haushaltsgeräts mittels der Kommunikationseinrichtung (unidirektionale Übermittlung der Statusinformation vom Haushaltsgerät zur Kommunikationseinrichtung) oder eine Bedienung des Haushaltsgeräts mittels der Kommunikationseinrichtung möglich (bidirektionale Übermittlung von Steuerbefehlen für das Haushaltsgerät und Rückmeldung von Statusinformationen an die Kommunikationseinrichtung).

Bei einer besonderen Ausführungsform des Verfahrens wird mittels der Anzeigeeinrichtung der Kommunikationseinrichtung in Abhängigkeit von einer jeweils ausgelesenen Kennung eine Benutzeroberfläche zur Bedienung des jeweiligen Haushaltsgeräts dargestellt, wobei die Darstellung der Benutzeroberfläche eine Darstellung zumindest einer empfangenen Statusinformation und/oder eine Darstellung zumindest eines Benutzeroberflächenelements zum Auslösen eines Steuerbefehls umfasst, wobei die oder jede Statusinformation mittels der Kommunikationseinrichtung regelmäßig aktualisiert wird und wobei bei Aktivierung eines Benutzeroberflächenelements ein jeweils zugeordneter Steuerbefehl an das Haushaltsgerät übermittelt wird. Dann ist mittels der Kommunikationseinrichtung das jeweilige Haushaltsgerät, das anhand der bei dem jeweils erfassten RFID-Transponder ausgelesenen Kennung identifiziert wurde, bedienbar. Die Bedienbarkeit des Haushaltsgeräts lässt sich dabei in das Bedienkonzept der jeweiligen Kommunikationseinrichtung integrieren, so dass auch moderne Bedienkonzepte, wie sie heute von Smartphones, Tablet Computern und dergleichen bekannt sind, zur Bedienung von Haushaltsgeräten verwendbar werden. Die Bedienbarkeit des Haushaltsgeräts kann damit auch leicht an fortschreitende Bedienkonzepte angepasst werden, die bisher zum Beispiel nur bei der Bedienung vom Smartphones und dergleichen bekannt sind. Des Weiteren kann unter Verwendung des hier und im Folgenden beschriebenen Ansatzes jede zukünftig bekannt werdende Bedienmöglichkeit elektronischer Geräte oder jedes zukünftig bekannt werdende Bedienkonzept unmittelbar auch zur Bedienung von Haushaltsgeräten verwendet werden.

Bei einer Ausführungsform des Verfahrens wird mittels der Kommunikationseinrichtung wiederkehrend und zu vorgegebenen oder vorgebbaren, insbesondere äquidistanten Zeitpunkten die Kennung eines in einem Erfassungsbereich der Kommunikationseinrichtung befindlichen RFID-Transponders ausgelesen und eine Ausführung einer zuvor abgerufenen projektierten Aktion gestoppt, wenn eine zuvor ausgelesene Kennung nicht mehr empfangen wird. Auf diese Weise lässt sich erkennen, wenn die Kommunikationseinrichtung aus dem Erfassungsbereich des RFID-Transponders entfernt wird. Dann soll zum Beispiel keine Darstellung einer Benutzeroberfläche zum Bedienen desjenigen Haushaltsgeräts, dem der RFID-Transponder, dessen Kennung zuvor ausgelesen wurde, räumlich zugeordnet ist, mehr erfolgen.

Die oben genannte Aufgabe wird auch mit einer Kommunikationseinrichtung gelöst, die zur Verwendung innerhalb des Systems oder zur Ausführung des Verfahrens wie hier und im Folgenden beschrieben bestimmt und eingerichtet ist. Die Kommunikationseinrichtung zeichnet sich dabei dadurch aus, dass sie nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch eine Verarbeitungseinheit der Kommunikationseinrichtung ausführbaren Programmcodeanweisungen und andererseits ein Speichermedium mit einem derartigen Computerprogramm, also ein Computerprogrammprodukt mit Programmcodemitteln, sowie schließlich auch eine Kommunikationseinrichtung, in deren Speicher als Mittel zur Durchführung des Verfahrens und seiner Ausgestaltungen ein solches Computerprogramm geladen oder ladbar ist.

Der Vorteil der Erfindung und ihrer Ausgestaltungen besteht damit insbesondere darin, dass mittels der bei einem RFID-Transponder auslesbaren Kennung eine jeweilige Position der Kommunikationseinrichtung maßgeblichen Einfluss auf die jeweils angebotenen Bedienmöglichkeiten eines Haushaltsgeräts mittels der Kommunikationseinrichtung hat. Wenn bei einer Situation, bei der das Haushaltsgerät eine Nahbereichskommunikationsschnittstelle aufweist, die eine kommunikative Verbindung mit der Kommunikationseinrichtung ermöglicht, davon ausgegangen werden kann, dass aufgrund eines sogenannten Pairings der beiden Nahbereichskommunikationsschnittstellen ebenfalls erkennbar ist, dass sich die Kommunikationseinrichtung zum Beispiel in räumlicher Nähe zu einer Kochfläche befindet und so die Darstellung einer Benutzeroberfläche zum Bedienen der Kochfläche mittels einer von der Kommunikationseinrichtung umfassten Anzeigeeinrichtung möglich ist, ist jedoch nur anhand zweier Nahbereichskommunikationsschnittstellen keine Darstellung einer Benutzeroberfläche zum Bedienen genau desjenigen Kochfelds der Kochfläche möglich, neben der die Kommunikationseinrichtung platziert wurde. Darüber hinaus ist mit dem hier und im Folgenden beschriebenen Ansatz auch eine automatische Auslösung von projektierten Aktionen möglich, die nur mittelbar mit einem Haushaltsgerät zu tun haben, wie zum Beispiel der Abruf einer Internetseite mit Rezeptdaten.

Wenn man in dieser Hinsicht ein Bild aus der Computertechnik bemühen will, lässt sich der hier und im Folgenden beschriebene Ansatz auch dadurch charakterisieren, dass mit jedem RFID-Transponder, der dort auslesbaren Kennung und einer anhand der Kennung im Speicher der Kommunikationseinrichtung abrufbaren Aktion quasi eine Tastatur mit einer Vielzahl von Funktionstasten geschaffen wird, wobei die Funktionalität der jeweiligen "Funktionstaste" durch die projektierbare Aktion festgelegt wird und wobei eine solche "Funktionstaste" betätigt wird, indem die Kommunikationseinrichtung in den Erfassungsbereich des jeweiligen RFID-Transponders bewegt oder in diesem Erfassungsbereich platziert wird.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das Ausführungsbeispiel ist nicht als Einschränkung der Erfindung zu verstehen. Vielmehr sind im Rahmen der vorliegenden Offenbarung auch Änderungen möglich, insbesondere solche, die sich durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten ergeben, für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Ein Ausführungsbeispiel der Erfindung ist in den Zeichnungen rein schematisch dargestellt und wird nachfolgend näher beschrieben. Es zeigen
- Figur 1: eine Arbeitsplatte mit einem Haushaltsgerät und in die Arbeitsplatte integrierten RFID-Transpondern,
- Figur 2: einen vergrößerten Ausschnitt auf der Darstellung gemäß Figur 1,
- Figur 3: ein Haushaltsgerät, eine Kommunikationseinrichtung sowie einen RFID-Transponder und
- Figur 4: eine Kommunikationseinrichtung mit weiteren Details.

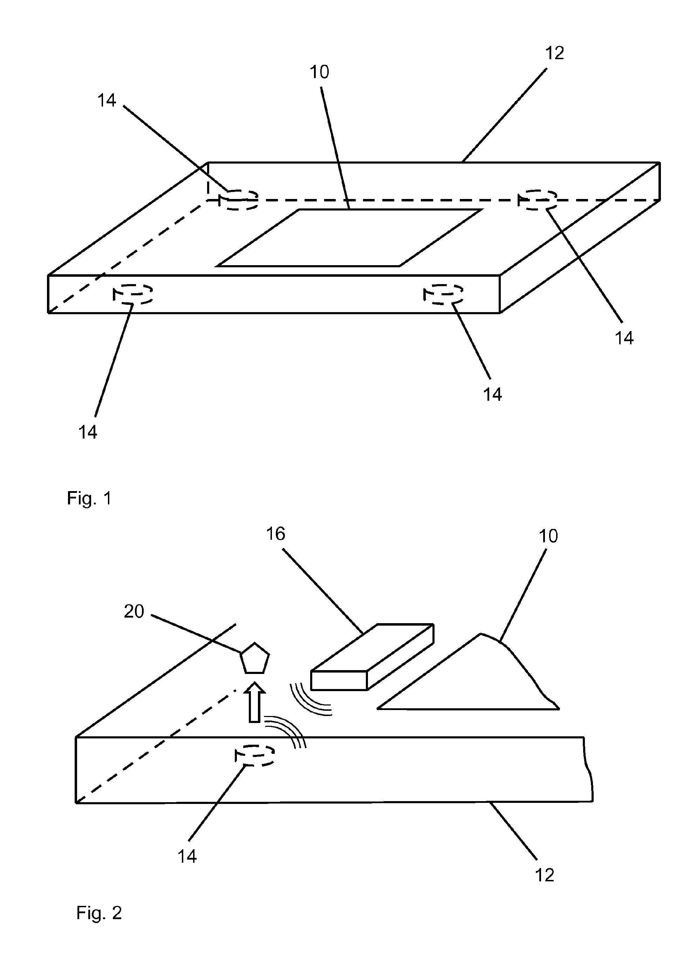

Die Darstellung in Figur 1 zeigt als Beispiel für ein Haushaltsgerät 10 eine Kochfläche, die in an sich bekannter Art und Weise in eine Arbeitsfläche 12, hier eine Küchenarbeitsplatte, eingebaut ist. In die Arbeitsfläche 12 ist mindestens ein RFID-Transponder 14 integriert. Bei der dargestellten Ausführungsform befinden sich in der Arbeitsfläche 12 insgesamt vier RFID-Transponder 14, die um die Kochfläche herum angeordnet sind, sich also jeweils im Bereich einer der Ecken der Kochfläche befinden. Andere Anordnungen in Bezug auf die Kochfläche und eine geringere oder höhere Anzahl von RFID-Transpondern 14 sind ebenfalls denkbar und je nach Anwendungsfall sinnvoll. Des Weiteren können einzelne oder alle RFID-Transponder 14 zum Beispiel auch auf einer Unterseite der Arbeitsfläche 12 angebracht sein.

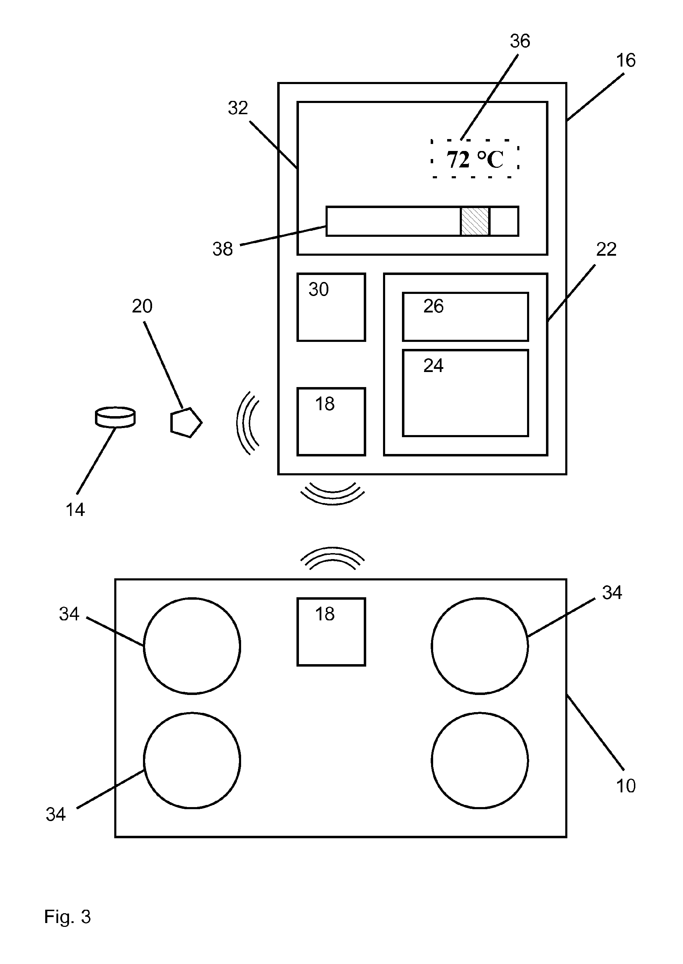

Die Darstellung in Figur 2 zeigt im Wesentlichen einen vergrößerten Ausschnitt aus der Darstellung in Figur 1. Im Unterschied zu der Darstellung in Figur 1 befindet sich auf der Arbeitsfläche 12 eine Kommunikationseinrichtung 16, zum Beispiel eine Kommunikationseinrichtung 16 in Form eines sogenannten Smartphones oder dergleichen. Die Kommunikationseinrichtung 16 umfasst eine Nahbereichskommunikationsschnittstelle 18 (Figur 3) und ist damit in der Lage, einen im Sende- und Empfangsbereich (Erfassungsbereich) der Nahbereichskommunikationsschnittstelle 18 befindlichen RFID-Transponder 14 zu aktivieren, so dass dieser in an sich bekannter Art und Weise eine Kennung 20 (RFID-Tag) ausgibt. Die Kommunikationseinrichtung 16 kann die Kennung 20 mit ihrer Nahbereichskommunikationsschnittstelle 18 erfassen. Diese Erfassung der Kennung 20 mittels der Kommunikationseinrichtung 16 wird hier und im Folgenden als das Auslesen der Kennung 20 eines RFID-Transponders 14 bezeichnet. Die Kommunikationseinrichtung 16 liest also die jeweilige Kennung 20 eines in ihrem Erfassungsbereich befindlichen RFID-Transponders 14 aus.

Hinsichtlich der bei einem RFID-Transponder 14 auslesbaren Kennung 20 ist vorgesehen, dass diese in Relation zu den bei benachbarten RFID-Transpondern 14 auslesbaren Kennungen 20 eindeutig ist. Wenn also mit Bezug auf die Darstellung in Figur 1 zum Beispiel davon ausgegangen wird, dass jeder der dort gezeigten RFID-Transponder 14 bei entsprechender Aktivierung eine eindeutige Kennung 20 ausgibt, wobei die RFID-Transponder 14 im Uhrzeigersinn links unten beginnend als Kennung 20 zum Beispiel die Zahlenwerte "4710", "4712", "4714" und "4718" ausgeben, ist für eine Kommunikationseinrichtung 16, die bei einer Aktivierung eines im Erfassungsbereich befindlichen RFID-Transponders 14 dort als Kennung 20 den Zahlenwert "4710" ausliest, automatisch erkennbar, dass diese sich im Bereich einer linken unteren Ecke des Kochfeldes befindet. Diese Erkennung setzt voraus, dass die bei dem oder jedem RFID-Transponder 14 auslesbare Kennung 20 im Wege einer entsprechenden Projektierung in einem Speicher 22 (Figur 3) der Kommunikationseinrichtung 16 angelegt sind. Dies wird mit weiteren Details anhand von Figur 3 erläutert.

Die Darstellung in Figur 3 zeigt einen RFID-Transponder 14, die Kommunikationseinrichtung 16, bei der es sich zum Beispiel um ein sogenanntes Smartphone, einen Tablet Computer oder einen sogenannten PDA (Personal Digital Assistant) oder dergleichen handelt, sowie in schematisch sehr stark vereinfachter Darstellung ein grundsätzlich beliebiges Haushaltsgerät 10, also zum Beispiel ein Kochfeld, einen Kühlschrank, eine Geschirrspül- oder Waschmaschine und so weiter.

Die Kommunikationseinrichtung 16 umfasst die bereits erwähnte Nahbereichskommunikationsschnittstelle 18. Mit dieser ist eine Aktivierung eines im Erfassungsbereich befindlichen RFID-Transponders 14 und das Erfassen einer von dem RFID-Transponder 14 aufgrund von dessen Aktivierung ausgegebenen Kennung 20 möglich. Eine so ausgelesene Kennung 20 wird in einem ebenfalls bereits erwähnten Speicher 22 der Kommunikationseinrichtung 16 abgelegt (abgelegte Kennung 20) und dort unter Kontrolle eines in den Speicher 22 geladenen Computerprogramms 24 mit projektierten, vorgegebenen oder vorgebbaren Kennungen verglichen. Diese werden zum Beispiel in einer Liste 26 mit projektierten Kennungen in Speicher 22 vorgehalten. Die Liste 26 umfasst mindestens eine projektierte Kennung und kann eine grundsätzlich beliebige Vielzahl projektierter Kennungen (zum Beispiel "4710", "4712", "4714","4718"; siehe oben) umfassen.

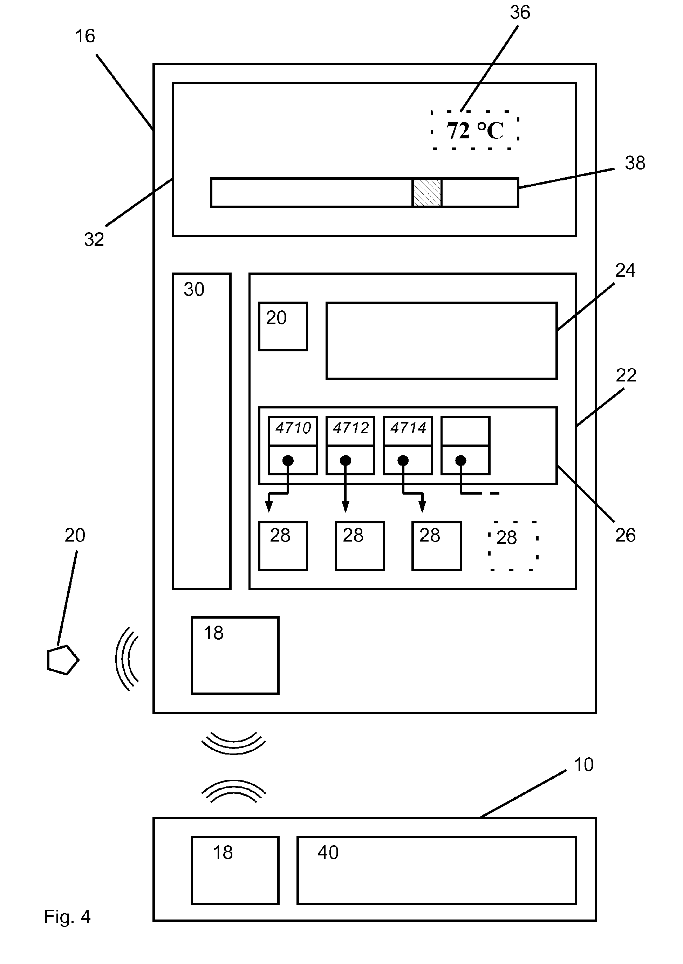

Sobald mittels des Computerprogramms 24 eine Übereinstimmung einer bei einem RFID-Transponder 14 ausgelesenen Kennung 20 mit einer in der Liste 26 bereits angelegten, projektierten Kennung festgestellt wird, wird mittels des Computerprogramms 24 eine zugehörige, projektierte und im Speicher 22 der Kommunikationseinrichtung 16 angelegte Aktion 28 (Figur 4) aufgerufen. Die Ausführung des Computerprogramms 24 und damit das Vergleichen der ausgelesenen Kennung 20 mit der oder jeder projektierten Kennung sowie das Aufrufen einer im Speicher 22 der Kommunikationseinrichtung 16 projektierten Aktion 28 im Falle einer Übereinstimmung einer ausgelesenen Kennung 20 mit einer im Speicher 22 (nämlich in der Liste 26) bereits angelegten, projektierten Kennung erfolgt in an sich bekannter Art und Weise mittels und unter Kontrolle einer Verarbeitungseinheit 30 der Kommunikationseinrichtung 16.

Bei der Verarbeitungseinheit 30 handelt es sich um eine Funktionseinheit in Form von oder nach Art eines an sich bekannten Mikroprozessors. Die jeweilige Kommunikationseinrichtung 16 umfasst in ebenfalls an sich bekannter Art und Weise eine Anzeigeeinrichtung 32 in Form eines Displays, insbesondere eines Displays in Form eines sogenannten Touchscreens. Mittels der Anzeigeeinrichtung 32 sind Informationen, die sich im Zusammenhang mit dem Aufruf einer projektierten Aktion 28 anhand der jeweils ausgelesenen Kennung 20 ergeben, einem Verwender der Kommunikationseinrichtung 16 darstellbar.

Die einfachste Form der Verwendung des hier beschriebenen Ansatzes besteht darin, dass die Kommunikationseinrichtung 16 anhand der jeweils bei einem RFID-Transponder 14 ausgelesenen Kennung 20 mittels der Kennung 20 eine Ortsinformation hinsichtlich ihrer jeweiligen Position, insbesondere hinsichtlich ihres jeweiligen Ablageortes, erhält. Der Verwender der Kommunikationseinrichtung 16 kann durch entsprechende Projektierung jede bei einem RFID-Transponder 14 auslesbare Kennung 20 mit einer im Speicher 22 der Kommunikationseinrichtung 16 abrufbaren Aktion 28 verknüpfen. Diese Verknüpfung einer auslesbaren Kennung 20 mit einer Aktion 28 wird hier und im Folgenden als Projektierung bezeichnet. Eine solche Projektierung kann in der Kommunikationseinrichtung 16 bereits angelegt sein, zum Beispiel als Bestandteil eines in den Speicher 22 ladbaren Computerprogramms 24. Bei einer solchen bereits angelegten Projektierung ist optional vorgesehen, dass diese vom Verwender der Kommunikationseinrichtung 16 zumindest ergänzt und oder auch in ihrer Gesamtheit geändert werden kann. Genauso kann vorgesehen sein, dass der Verwender der Kommunikationseinrichtung 16 die Projektierung vollständig selbst vornimmt.

Mittels der Projektierung sind bestimmte Orte, nämlich die Orte, an denen sich jeweils ein RFID-Transponder 14 befindet, mit einer Aktion 28 verknüpfbar und bei einer Anwendung des hier beschriebenen Ansatzes mit einer Aktion 28 verknüpft. Auf diese Weise ist es möglich, dass bei einer Platzierung der Kommunikationseinrichtung 16 im Bereich zum Beispiel des RFID-Transponders 14, der sich in der Nähe der linken unteren Ecke der Kochfläche (Figur 1) befindet, eine Internetverbindung zu einer Rezeptdatenbank geöffnet wird. Das Öffnen der Internetverbindung und die Adresse der Rezeptdatenbank sind dann Teil einer entsprechend projektierten Aktion 28 und gegebenenfalls im Rahmen einer Projektierung auch änderbar. Eine projektierte Aktion 28 kann zum Beispiel auch bewirken, dass mittels der Kommunikationseinrichtung 16 ein im Speicher 22 abgelegter Musiktitel abgespielt wird oder dass eine Internetverbindung geöffnet wird, um die Dienstleistungen eines sogenannten Internetradios zu nutzen und so weiter. Der Art der möglichen projektierbaren Aktionen 28 sind im Grunde keine Grenzen gesetzt und die hier genannten Beispiele sind ausdrücklich nur zur Erläuterung und zum besseren Verständnis erwähnt.

Ein Verwender der Kommunikationseinrichtung 16 kann diese durch entsprechende Projektierung so einrichten, dass bei einer bestimmten Positionierung oder Platzierung der Kommunikationseinrichtung 16 automatisch eine vom Verwender jeweils gewünschte Aktion 28 ausgelöst wird. Dann wird bei einem System, das zumindest ein Haushaltsgerät 10, eine mobile Kommunikationseinrichtung 16 und mindestens einen dem Haushaltsgerät 10 räumlich zugeordneten RFID-Transponder 14 umfasst, mittels der Kommunikationseinrichtung 16 eine Kennung 20 eines in einem Erfassungsbereich der Kommunikationseinrichtung 16 befindlichen RFID-Transponders 14 ausgelesen und mittels einer jeweils ausgelesenen Kennung 20 eine in einem Speicher 22 der Kommunikationseinrichtung 16 projektierte Aktion 28 abgerufen. Das zugrunde liegende System mit dem mindestens einen Haushaltsgerät 10, der mobilen Kommunikationseinrichtung 16 und dem mindestens einen dem Haushaltsgerät 10 räumlich zugeordneten RFID-Transponder 14 zeichnet sich dadurch aus, dass mittels der Kommunikationseinrichtung 16 eine Kennung 20 eines in einem Erfassungsbereich der Kommunikationseinrichtung 16 befindlichen RFID-Transponders 14 auslesbar ist und dass mittels einer jeweils ausgelesenen Kennung 20 eine im Speicher 22 der Kommunikationseinrichtung 16 projektierte Aktion 28 abrufbar ist.

Bei der in Figur 3 exemplarisch gezeigten Situation ist darüber hinaus noch vorgesehen, dass nicht nur die Kommunikationseinrichtung 16, sondern auch das Haushaltsgerät 10 eine Nahbereichskommunikationsschnittstelle 18 aufweist. Dann sind mittels der beiden Nahbereichskommunikationsschnittstellen 18 Daten zwischen dem Haushaltsgerät 10 und der Kommunikationseinrichtung 16 in Abhängigkeit von einer jeweils ausgelesenen Kennung 20 austauschbar und solche Daten werden bei Anwendung des hier vorgeschlagenen Ansatzes ausgetauscht.

Ein einfaches, aber gleichwohl illustratives Beispiel geht von einer Kochfläche als Haushaltsgerät 10 aus. Bei der Kochfläche wird angenommen, dass diese zum Beispiel vier Kochfelder 34 umfasst. Bei vier der Kochfläche räumlich zugeordneten RFID-Transpondern 14, wie dies in der Darstellung in Figur 1 gezeigt ist, kann also von einer Zuordnung jeweils eines RFID-Transponders 14 zu jeweils einem der Kochfelder 34 (Figur 3) ausgegangen werden. Wenn die Kommunikationseinrichtung 16 im Erfassungsbereich eines der RFID-Transponder 14 platziert wird, sind damit zwischen der Kommunikationseinrichtung 16 und der Kochfläche Daten in Bezug auf das dem RFID-Transponder 14 zugeordnete Kochfeld 34 austauschbar. Wenn also die Kommunikationseinrichtung 16 zum Beispiel im Erfassungsbereich eines in der Nähe der linken unteren Ecke der Kochfläche angeordneten RFID-Transponders 14 platziert wird, kann die mit der dort auslesbaren Kennung 20 assoziierte Aktion 28 einen Austausch von Daten zwischen der Kommunikationseinrichtung 16 und dem jeweiligen Haushaltsgerät 10, hier also der Kochfläche bewirken, wobei sich die ausgetauschten Daten auf das innerhalb der Kochfläche unten links gebildete Kochfeld 34 beziehen.

Bei den ausgetauschten Daten handelt es sich im einfachsten Fall um unidirektional übermittelte Daten, also zum Beispiel ein Datum, das vom Haushaltsgerät 10 an die Kommunikationseinrichtung 16 übermittelt wird, und mit dem kodiert ist, ob sich das Haushaltsgerät 10 oder eine Teilfunktionalität des Haushaltsgeräts 10, hier also das jeweilige Kochfeld 34, in Betrieb befindet. Bei einer ebenfalls noch unidirektionalen Datenübermittlung kann das übermittelte Datum auch einen spezifischeren Status des Haushaltsgeräts 10, hier also des jeweiligen Kochfelds 34, kodieren, zum Beispiel indem das übermittelte Datum eine aktuelle Temperatur des Kochfelds 34 kodiert. Jedes so übermittelte Datum ist mittels der von der Kommunikationseinrichtung 16 umfassenden Anzeigeeinrichtung 32 darstellbar. Die Darstellung muss nicht notwendig nur das oder jedes von dem jeweiligen Haushaltsgerät 10 empfangene Datum umfassen, sondern kann auch Daten umfassen, die im Rahmen der Projektierung der jeweils aufgerufenen Aktion 28 festgelegt wurden und damit bereits mit dem jeweiligen Kochfeld 34 verknüpfbar sind, hier also zum Beispiel den Text "Kochfeld unten links". Eine auf diese Art und Weise mittels der Anzeigeeinrichtung 32 für den Verwender der Kommunikationseinrichtung 16 darstellbare Information lautet demnach zum Beispiel: "Kochfeld unten links: AN" oder "Temperatur Kochfeld unten links: 78 °C". In Figur 3 ist dafür schematisch vereinfacht nur eine Temperaturanzeige 36 dargestellt.

Aufgrund der heute gängigen Fähigkeiten graphischer Anzeigeeinrichtungen 32, wie sie üblicherweise von Kommunikationseinrichtungen 16 in Form von Smartphones und dergleichen umfasst sind, muss die Darstellung der jeweiligen Information für den Verwender der Kommunikationseinrichtung 16 nicht auf eine rein textuelle Darstellung der Information beschränkt bleiben. Vielmehr kann die Darstellung der jeweiligen Information in ansprechender und/oder schnell erfassbarer Art und Weise graphisch aufbereitet werden. Ein einfaches Beispiel in dieser Hinsicht ist ein Farbumschlag bei Erreichen vorgegebener oder vorgebbarer Temperaturschwellwerte, so dass die jeweils aktuelle Temperatur des Kochfelds 34 beispielsweise in rot oder vor einem roten Hintergrund angezeigt wird, wenn ein oberer Schwellwert erreicht oder überschritten wird.

Die oben beschriebene unidirektionale Übermittlung von Daten zwischen dem jeweiligen Haushaltsgerät 10 und der Kommunikationseinrichtung 16 ist eine unidirektionale Übermittlung von Daten von dem jeweiligen Haushaltsgerät 10 zur Kommunikationseinrichtung 16. Genauso kann eine unidirektional Übermittlung von Daten von der Kommunikationseinrichtung 16 zum jeweiligen Haushaltsgerät 10 vorgesehen sein. Ein Beispiel in dieser Hinsicht ist ein An- oder Abschalten eines jeweiligen Kochfelds 34 einer Kochfläche oder eine Leistungsstufen- oder Temperaturvorwahl für das jeweilige Kochfeld 34.

Bei einer besonderen Ausführungsform ist auch eine bidirektionale Übermittlung von Daten zwischen dem jeweiligen Haushaltsgerät 10 und der Kommunikationseinrichtung 16 vorgesehen. Dann fungiert die Kommunikationseinrichtung 16 als Bedieneinrichtung und gleichsam als Fernbedienung für das jeweilige Haushaltsgerät 10. Mittels an der Kommunikationseinrichtung 16, also an einer dortigen Tastatur oder einem dortigen Touchscreen, vorgenommenen Bedienhandlungen erfolgt eine Bedienung des jeweiligen Haushaltsgeräts 10. Dafür werden aufgrund der Bedienhandlungen generierte Steuerbefehle von der Kommunikationseinrichtung 16 an das jeweilige Haushaltsgerät 10 übermittelt. Statusinformationen des so bedienten Haushaltsgeräts 10 werden vom Haushaltsgerät 10 an die Kommunikationseinrichtung 16 übermittelt und auf Seiten der Kommunikationseinrichtung 16 mittels der davon umfassten Anzeigeeinrichtung 32 dargestellt.

Die Darstellung mittels der Anzeigeeinrichtung 32 umfasst bei einer besonderen Ausführungsform eine graphische Benutzeroberfläche für das jeweilige Haushaltsgerät 10. Eine solche graphische Benutzeroberfläche kann zum Beispiel die Darstellung eines Schiebereglers 38 umfassen, der hier als Beispiel für ansonsten beliebige Benutzeroberflächenelemente genannt ist, so dass durch Bedienhandlungen in Bezug auf diesen Schieberegler 38 eine Leistungseinstellung in Bezug auf das jeweilige Haushaltsgerät 10 bewirkbar ist. Ein jeweils aktueller Status des Haushaltsgeräts 10 oder einer Teilfunktionalität wird ebenfalls innerhalb der Benutzeroberfläche dargestellt, wie dies in Figur 3 exemplarisch mit der Temperaturanzeige 36 illustriert ist.

Mittels der Anzeigeeinrichtung 32 der Kommunikationseinrichtung 16 wird also in Abhängigkeit von einer jeweils ausgelesenen Kennung 20 aufgrund des Abrufs einer mit der Kennung 20 assoziierten Aktion 28 eine Benutzeroberfläche dargestellt. Die Darstellung der Benutzeroberfläche umfasst eine Darstellung zumindest einer empfangenen Statusinformation, hier die Temperaturanzeige 36, und/oder eine Darstellung von Benutzeroberflächenelementen, hier die Darstellung eines Schiebereglers 38. Das oder jedes Benutzeroberflächenelement ist zum Auslösen eines Steuerbefehls vorgesehen. Die oder jede Statusinformation wird mittels der Kommunikationseinrichtung 16 (und durch Datenaustausch mittels der beiden Nahbereichskommunikationsschnittstellen 18) regelmäßig aktualisiert. Bei Aktivierung eines Benutzeroberflächenelements wird mittels der Kommunikationseinrichtung 16 (und durch Datenaustausch mittels der beiden Nahbereichskommunikationsschnittstellen 18) ein jeweils zugeordneter Steuerbefehl an das Haushaltsgerät 10 übermittelt und dort ausgewertet und ausgeführt.

Die Darstellung in Figur 4 zeigt die Kommunikationseinrichtung 16 mit weiteren Details. Dort sind die projektierbaren Aktionen 28 als separate und in den Speicher 22 der Kommunikationseinrichtung 16 geladene Softwarefunktionalitäten gezeigt. Im Falle einer Ausführung der projektierbaren Aktionen 28 als jeweils separate Softwarefunktionalität kommt für deren Implementierung eine Realisierung in Form einer sogenannten "App" in Betracht. Genauso können die projektierbaren Aktionen 28 auch Bestandteil des Computerprogramms 24 sein und auf die Realisierung im Einzelfall kommt es nicht an. Wichtig ist, dass im Speicher 22 der Kommunikationseinrichtung 16 einzelne mögliche erfassbare Kennungen 20 angelegt sind. Dafür ist in Figur 4 die bereits erwähnte Liste 26 mit weiteren Details gezeigt. Hier umfasst die Liste 26 eine Mehrzahl von Datensätzen und jeder Datensatz umfasst eine projektierte Kennung (exemplarisch in Figur 4 mit "4710", "4712" und "4714" gezeigt) und eine Referenz auf eine mit einer projektierten Kennung assoziierte Aktion 28 (in Form des von dem Datensatz ausgehenden und zu der jeweils assoziierten Aktion 28 weisenden Pfeils gezeigt). Genauso könnte auch vorgesehen sein, dass dem Computerprogramm 24 eine Mehrzahl von anhand einer jeweils erfassten Kennung 20 abrufbaren, projektierten Aktionen 28 bekannt gemacht wird und dass jede projektierte Aktion 28 selbst die Kennung, mit der sie verknüpft ist, umfasst. Auch hier kommt es auf die konkrete Realisierung nicht an, so dass die in Figur 4 schematisch vereinfacht gezeigte Realisierungsmöglichkeit nur als Beispiel zu verstehen ist. Jede projektierte Aktion 28 umfasst Programmcodeanweisungen zur Kodierung der mit der jeweiligen projektierten Aktion 28 beabsichtigten Verfahrensschritte. Darüber hinaus umfasst jede projektierte Aktion 28 Daten, auf die im Rahmen einer Ausführung der projektierten Aktion 28 mittels der Verarbeitungseinheit 30 zugegriffen wird. Ein solches Datum kodiert zum Beispiel eine Internetadresse.

Je nach Funktionalität der projektierten Aktion 28 kann ein solches Datum zum Beispiel auch eine Speicherstelle einer von dem Haushaltsgerät 10 umfassten Steuerungseinrichtung 40 kodieren, um im Rahmen einer Ausführung der projektierten Aktion mittels der Verarbeitungseinheit 30 der Kommunikationseinrichtung 16 auf ein dort gespeichertes Datum, zum Beispiel eine Statusinformation des Haushaltsgeräts 10, zugreifen zu können. Des Weiteren ist ebenfalls möglich, dass ein solches Datum einen an ein jeweiliges Haushaltsgerät 10 übermittelbaren Steuerungsbefehl kodiert, um bei einer Ausführung der projektierten Aktion 28 mittels der Verarbeitungseinheit 30 der Kommunikationseinrichtung 16 diesen Steuerungsbefehl an das jeweilige Haushaltsgerät 10 zu übermitteln, so dass dort entsprechend dem übermittelten Steuerungsbefehl und mittels der Steuerungseinrichtung 40 des Haushaltsgeräts 10 zum Beispiel eine Aktivierung eines Kochfelds 34 ausgelöst wird.

Eine projektierte Aktion 28, nämlich die von einer Softwareimplementierung einer solchen projektierten Aktion 28 umfassten Programmcodeanweisungen und die mittels der Programmcodeanweisungen be- und verarbeiteten Daten, kann bzw. können auch von einem Anbieter eines jeweiligen Haushaltsgeräts 10 spezifisch für das jeweilige Haushaltsgerät 10 bereitgestellt werden. Dann besteht für einen Verwender einer Kommunikationseinrichtung 16 der hier beschriebenen Art die Möglichkeit, eine solche projektierbare Aktion 28 bei dem Hersteller des jeweiligen Haushaltsgeräts 10 zu beziehen und in den Speicher 22 der Kommunikationseinrichtung 16 zu laden.

Im Ergebnis ermöglicht der hier vorgestellte Ansatz also auch einen Zugriff auf jeweils ein Haushaltsgerät 10 mittels einer Kommunikationseinrichtung 16. Der Zugriff auf das Haushaltsgerät 10 reicht von einem Datenabruf bei dem Haushaltsgerät 10 bis zu einer vollständigen Bedienung des Haushaltsgeräts 10 mittels der Kommunikationseinrichtung 16 und einer auf dessen Anzeigeeinrichtung 32 darstellbaren Benutzeroberfläche zur Bedienung des Haushaltsgeräts 10. Der jeweilige Zugriff auf das Haushaltsgerät 10 bleibt dabei stets haushaltsgerätsspezifisch, denn der Zugriff erfolgt entsprechend der jeweiligen projektierten Aktion 28 und diese wird anhand einer von einem RFID-Transponder 14 ausgelesenen Kennung 20 abgerufen und ausgeführt.

Mit ein und derselben Kommunikationseinrichtung 16 ist damit die Bedienung unterschiedlicher Haushaltsgeräte 10 möglich. Beispielhaft wird von einem ersten Haushaltsgerät 10 in Form der bereits erwähnten Kochfläche und einem zweiten Haushaltsgerät 10 in Form eines Kühlschranks oder dergleichen ausgegangen. Wenn die Kommunikationseinrichtung 16 so positioniert oder platziert wird, dass eine Kennung 20 eines in räumlicher Nähe der Kochfläche befindlichen RFID-Transponders 14 ausgelesen wird, wird eine mit dieser Kennung 20 im Speicher 22 der Kommunikationseinrichtung 16 assoziierte Aktion 28 abgerufen. Diese ermöglicht zum Beispiel die vollständige Bedienung der Kochfläche oder einzelner Kochfelder 34 der Kochfläche, so dass mit der Ausführung der von der so abgerufenen Aktion 28 umfassten Programmcodeanweisungen auf der Anzeigeeinrichtung 32 unmittelbar eine Benutzeroberfläche zum Bedienen des Kochfelds 34 erscheint. Wenn die Kommunikationseinrichtung 16 aus dem Erfassungsbereich des der Kochfläche zugeordneten RFID-Transponders 14 entfernt wird, wird die Ausführung der zuvor abgerufenen Aktion 28 gestoppt. Entsprechend verschwindet auf der Anzeigeeinrichtung 32 auch die Darstellung der Benutzeroberfläche zum Bedienen der Kochfläche. Wenn die Kommunikationseinrichtung 16 dann so positioniert oder platziert wird, dass eine Kennung 20 eines in räumlicher Nähe des Kühlschranks befindlichen RFID-Transponders 14 ausgelesen wird, wird eine mit dieser Kennung 20 im Speicher 22 der Kommunikationseinrichtung 16 assoziierte Aktion 28 abgerufen. Auch diese Aktion 28 kann die vollständige Bedienung des Kühlschranks ermöglichen, so dass zum Beispiel unmittelbar mit der Ausführung der von der so abgerufenen Aktion 28 umfassten Programmcodeanweisungen eine Benutzeroberfläche zum Bedienen des Kühlschranks auf der Anzeigeeinrichtung 32 der Kommunikationseinrichtung 16 erscheint. Wenn die Kommunikationseinrichtung 16 sodann wieder aus dem Bereich um den Kühlschrank entfernt und zum Beispiel erneut im Bereich der Kochfläche platziert wird, wird dies anhand der dann erneut bei dem dortigen RFID-Transponder 14 ausgelesenen Kennung 20 erkannt, so dass wieder die Benutzeroberfläche zum Bedienen der Kochfläche erscheint, und so weiter.

Soweit in der Darstellungen eine Integration eines RFID-Transponders 14 oder eine Mehrzahl von RFID-Transpondern 14 in eine Arbeitsfläche 12, in die das jeweilige Haushaltsgerät 10 eingebaut oder einbaubar ist, gezeigt ist, versteht sich von selbst, dass der oder jeder RFID-Transponder 14 auch in eine Oberfläche des Haushaltsgeräts 10 integriert oder auf einer Rückseite oder Unterseite einer solchen Oberfläche angebracht sein kann.

Einzelne im Vordergrund stehende Aspekte der hier eingereichten Beschreibung lassen sich damit kurz wie folgt zusammenfassen: Angegeben werden ein System mit einem Haushaltsgerät 10, einer mobilen Kommunikationseinrichtung 16 und mindestens einem dem Haushaltsgerät 10 räumlich zugeordneten RFID-Transponder 14, wobei mittels der Kommunikationseinrichtung 16 eine Kennung 20 eines in einem Erfassungsbereich der Kommunikationseinrichtung 16 befindlichen RFID-Transponders 14 auslesbar ist und wobei mittels einer jeweils ausgelesenen Kennung 20 eine in einem Speicher 22 der Kommunikationseinrichtung 16 projektierte Aktion 28 abrufbar ist, sowie ein Verfahren zum Betrieb eines solchen Systems und eine in einem solchen System oder für ein solches Verfahren verwendbare Kommunikationseinrichtung 16.

### Bezugszeichenliste

- 10: Haushaltsgerät
- 12: Arbeitsfläche
- 14: RFID-Transponder
- 16: Kommunikationseinrichtung
- 18: Nahbereichskommunikationsschnittstelle
- 20: Kennung
- 22: Speicher (der Kommunikationseinrichtung)
- 24: Computerprogramm
- 26: Liste
- 28: projektierte Aktion
- 30: Verarbeitungseinheit (der Kommunikationseinrichtung)
- 32: Anzeigeeinrichtung (der Kommunikationseinrichtung)
- 34: Kochfeld
- 36: Temperaturanzeige
- 38: Schieberegler
- 40: Steuerungseinrichtung (des Haushaltsgeräts)

## Patentansprüche

1. System umfassend ein Haushaltsgerät (10), eine mobile Kommunikationseinrichtung (16) und mindestens einen dem Haushaltsgerät (10) räumlich zugeordneten RFID-Transponder (14),
wobei mittels der Kommunikationseinrichtung (16) eine Kennung (20) eines in einem Erfassungsbereich der Kommunikationseinrichtung (16) befindlichen RFID-Transponders (14) auslesbar ist und
wobei mittels einer jeweils ausgelesenen Kennung (20) eine in einem Speicher (22) der Kommunikationseinrichtung (16) projektierte Aktion (28) abrufbar ist.

2. System nach Anspruch 1,
wobei das Haushaltsgerät (10) und die Kommunikationseinrichtung (16) jeweils eine Nahbereichskommunikationsschnittstelle (18) aufweisen,
wobei mittels der Nahbereichskommunikationsschnittstellen (18) Daten zwischen dem Haushaltsgerät (10) und der Kommunikationseinrichtung (16) in Abhängigkeit von einer jeweils ausgelesenen Kennung (20) austauschbar sind.

3. System nach Anspruch 1 oder 2,
wobei der oder jeder RFID-Transponder (14) in eine Oberfläche des Haushaltsgeräts (10) integriert ist.

4. System nach Anspruch 1 oder 2,
wobei der oder jeder RFID-Transponder (14) in eine Arbeitsfläche (12), in die das Haushaltsgerät (10) eingebaut oder einbaubar ist, integriert ist.

5. Verfahren zum Betrieb eines Systems nach einem der vorangehenden Ansprüche,
wobei mittels der Kommunikationseinrichtung (16) eine Kennung (20) eines in einem Erfassungsbereich der Kommunikationseinrichtung (16) befindlichen RFID-Transponders (14) ausgelesen wird und
wobei mittels einer jeweils ausgelesenen Kennung (20) eine in einem Speicher (22) der Kommunikationseinrichtung (16) projektierte Aktion (28) abgerufen wird.

6. Verfahren nach Anspruch 5, wobei mittels der Kommunikationseinrichtung (16) wiederkehrend zu vorgegebenen oder vorgebbaren Zeitpunkten die Kennung (20) eines in einem Erfassungsbereich der Kommunikationseinrichtung (16) befindlichen RFID-Transponders (14) ausgelesen wird und wobei eine Ausführung einer zuvor abgerufenen projektierten Aktion (28) gestoppt wird, wenn eine zuvor ausgelesene Kennung (20) nicht mehr empfangen wird.

7. Verfahren nach Anspruch 5 oder 6, wobei das Haushaltsgerät (10) und die Kommunikationseinrichtung (16) jeweils eine Nahbereichskommunikationsschnittstelle (18) aufweisen,
wobei mittels der Nahbereichskommunikationsschnittstellen (18) Daten zwischen dem Haushaltsgerät (10) und der Kommunikationseinrichtung (16) austauschbar sind und wobei die Kommunikationseinrichtung (16) Daten vom Haushaltsgerät (10) empfängt und/oder Daten an das Haushaltsgerät (10) übermittelt.

8. Verfahren nach Anspruch 7, wobei die Kommunikationseinrichtung (16) als Daten vom Haushaltsgerät (10) Statusinformationen des Haushaltsgeräts (10) empfängt und wobei die Kommunikationseinrichtung (16) die empfangenen Statusinformationen mittels einer von der Kommunikationseinrichtung (16) umfassten Anzeigeeinrichtung (32) darstellt.

9. Verfahren nach Anspruch 7 oder 8, wobei die Kommunikationseinrichtung (16) als Daten zum Haushaltsgerät (10) einen Steuerbefehl übermittelt und wobei das Haushaltsgerät (10) den Steuerbefehl ausführt.

10. Verfahren nach Anspruch 8 und 9, wobei auf der Anzeigeeinrichtung (32) der Kommunikationseinrichtung (16) in Abhängigkeit von einer jeweils ausgelesenen Kennung (20) eine Benutzeroberfläche (36, 38) dargestellt wird und wobei die Darstellung der Benutzeroberfläche (36, 38) eine Darstellung einer empfangenen Statusinformation (36) und/oder eine Darstellung von Benutzeroberflächenelementen (38) zum Auslösen eines Steuerbefehls umfasst, wobei die oder jede Statusinformation mittels der Kommunikationseinrichtung (16) regelmäßig aktualisiert wird und wobei bei Aktivierung eines Benutzeroberflächenelements (38) ein jeweils zugeordneter Steuerbefehl an das Haushaltsgerät (10) übermittelt wird.

11. Computerprogramm (24) mit Programmcodemitteln, um alle Schritte von jedem beliebigen der Ansprüche 5 bis 10 durchzuführen, wenn das Computerprogramm (24) mittels einer Verarbeitungseinheit (30) ausgeführt wird, die von einer als Bestandteil eines Systems gemäß einem der Ansprüche 1 bis 4 fungierenden Kommunikationseinrichtung (16) umfasst ist.

12. Kommunikationseinrichtung (16) mit einer Verarbeitungseinheit (30) und einem Speicher (22), in den ein Computerprogramm (24) nach Anspruch 11 geladen ist, das im Betrieb der Kommunikationseinrichtung (16) durch die Verarbeitungseinheit (30) ausgeführt wird.
